Europäisches Patentamt

European Patent Office

Office européen des brevets

(19)

(11) EP 1 444 904 A1

(12) EUROPEAN PATENT APPLICATION
published in accordance with Art. 158(3) EPC

(43) Date of publication:
11.08.2004 Bulletin 2004/33

(51) Int Cl.⁷: $A23L\ 3/00$, A23L 3/3562

(21) Application number: 02803096.3

(22) Date of filing: 29.10.2002

(86) International application number:
PCT/JP2002/011244

(87) International publication number:
WO 2003/041516 (22.05.2003 Gazette 2003/21)

(84) Designated Contracting States:
AT BE BG CH CY CZ DE DK EE ES FI FR GB GR
IE IT LI LU MC NL PT SE SK TR

(30) Priority: 16.11.2001 JP 2001351078

(71) Applicant: Ajinomoto Co., Inc.
Tokyo 104-8315 (JP)

(72) Inventors:
• KURAUCHI, Masahiko,
c/o AJINOMOTO CO., INC.
Kawasaki-shi, Kanagawa 210-8681 (JP)

• FURUTA, Kiyonori, c/o AJINOMOTO CO., INC.
Kawasaki-shi, Kanagawa 210-8681 (JP)
• SATO, Hiroyuki, c/o AJINOMOTO CO., INC.
Kawasaki-shi, Kanagawa 210-8681 (JP)

(74) Representative: Nicholls, Kathryn Margaret et al
Mewburn Ellis LLP
York House
23 Kingsway
London WC2B 6HP (GB)

(54) **ANTIBACTERIAL PACKAGING MATERIALS**

(57)    An object of the present invention is to provide a wrapping material having excellent antibacterial property and safety.

Means for solving the above according to the present invention is to use a wrapping material or an underlay where a partial ester of basic amino acid with cellulose or a salt thereof is used as a constituting component. Specific examples of the partial ester of basic amino acid with cellulose are a partial ester of lysine with cellulose, a partial ester of arginine with cellulose, a partial ester of ornithine with cellulose and a partial ester of histidine with cellulose.

EP 1 444 904 A1

**Description**

Technical Field

The present invention relates to a wrapping material and an underlay having excellent antibacterial property and safety. More particularly, it relates to a wrapping material and an underlay where a partial ester of basic amino acid with cellulose or a salt thereof is used as a constituting component.

Background Art

In recent years, many novel antibacterial products have been put into the market in various fields backed by an issue of public concern for infection by methicillin-resistant *Staphylococcus aureus* (MRSA) and enteropathogenic *Escherichia coli* 0-157. With regard to wrapping materials, when it is taken into consideration that they also affect the safety of the product, an antibacterial property is one of the important functions in view of prevention of infectious diseases.

Quite a lot of techniques have been disclosed for wrapping materials and underlays to which antibacterial property is given and, since the product which is to be wrapped is directly eaten particularly in the field of wrapping materials for foods and underlays for foods, various attempts for their development has been carried out. Most of them are occupied by those where an antibacterial agent of a metal type represented by silver is kneaded (e.g., Japanese Patent Laid-Open No. 10/310,671) and where an organic antibacterial agent represented by an isothiocyanate ester is applied to or kneaded into the material of a synthetic resin type (e.g., Japanese Patent Laid-Open No. 10/034,791). However, materials of a synthetic resin type may have a bad influence on environment due to their low biodegradability and are not always desirable.

On the other hand, among the disclosed techniques, there are a few wrapping materials and underlays where materials of a cellulose type including wood and paper are used and, in Japanese Patent Laid-Open No. 03/000,898 for example, paper having an antibacterial activity where metal salt of a long-chain acyl amino acid is attached is disclosed. In Japanese Patent Laid-Open No. 04/021,614, there is disclosed a wrapping material for keeping the freshness of perishable foods, etc. prepared by attaching an aqueous extract of soil to cloth, paper, etc. In Japanese Patent Laid-Open No. 07/020,515, there is disclosed a method for an antibacterial treatment of a wood product where fine glass particles prepared by a fine pulverization of glass to which silver oxide is added are permeated into tissues such as wooden box for wrapping the food. In Japanese Patent Laid-Open No. 08/100,395, there is disclosed an antibacterial and antifungal paper where ceramics carrying silver is used as a material therefor. In Japanese Patent Laid-Open No. 09/191,822, there is disclosed a preservation material for perishable foods where a sheet prepared by application of horseradish oil or allyl isothiocyanate to water-absorbing sheet such as paper, cloth and nonwoven fabric is a constituting element. In Japanese Patent Laid-Open No. 10/001,897, there is disclosed an antibacterial paper compounded with a silver-containing antibacterial agent and an alkaline earth metal salt. In Japanese Patent Laid-Open No. 10/025,699, there is disclosed a material paper for wrapping and a corrugated cardboard which are made antibacterial by application of potassium sorbate. In Japanese Patent Laid-Open No. 10/280,298, there is disclosed an antibacterial paper where ε-polylysine is attached to or permeated into paper. In Japanese Patent Laid-Open No. 10/298,898, there is disclosed an antibacterial paper where fibrous chitin and pulp are mixed. In Japanese Patent Laid-Open No. 2000/110,099, there is disclosed an antibacterial paper for food where an antibacterial agent where catechin of a tea extract and quinone of an extract of *Phyllostachys pubescens* are components is applied on the surface.

As mentioned above, those wrapping materials and underlays use materials of a cellulose type and, when their influence on environment is taken into consideration, it goes without saying that they are better. However, there is a problem which is common in all of those disclosed methods that, in all of them, chemical substance or metal having an antibacterial action is contained by means of application, permeation, etc. and bonding of the cellulose-type material to the antibacterial agent is loose whereby there is a possibility of elution by a liquid being oozed out from the food or of detachment by rubbing against the food. There is another problem that, when the antibacterial component is metal, it remains as a residue after burning.

Disclosure of the Invention

An object of the present invention is to provide a wrapping material and an underlay having excellent antibacterial property and safety and showing no problem as mentioned above.

The present inventors have found that, when a wrapping material or an underlay or a part of it is constituted from a partial ester of basic amino acid with cellulose or a salt thereof, the above-mentioned object is achieved whereupon they have accomplished the present invention.

Thus, the present invention relates to a wrapping material or an underlay where a partial ester of basic amino acid with cellulose or a salt thereof is a constituting component.

Best Mode for Carrying Out the Invention

The partial ester of basic amino acid with cellulose or a salt thereof which is used in the present invention has such a structure that a carboxyl group of a basic amino acid forms a covalent bond (ester bond) with a part of hydroxyl groups of a cellulose molecule. Therefore, cellulose and amino acid do not form a mere adhesion but a strong chemical bond and, even when used as a wrapping material for perishable foods containing much amount of water, it is believed neither elution by liquid being oozed out from the food nor detachment by rubbing against the food takes place. In addition, even when the ester bond is cleaved, the component which is detached is an amino acid which is nontoxic to living body and, therefore, it is believed that safety is very high.

Examples of the basic amino acid moiety in the partial ester of basic amino acid with cellulose are lysine, arginine, ornithine and histidine residues and it is also possible to use a mixture thereof.

The cellulose which is a material for the partial ester of basic amino acid with cellulose may be either natural cellulose or regenerated cellulose. Examples of its form are powder, fiber, cloth, nonwoven fabric, wood and paper in the case of natural cellulose, while in the case of regenerated cellulose, they are powder, fiber, cloth, nonwoven fabric and film. Incidentally, the cellulose used here may be subjected to a pretreatment using, for example, an alkali by a common method.

Degree of substitution with an ester for the partial ester of basic amino acid with cellulose or a salt thereof is from 0.0001 to less than 3.

Specific examples of the partial ester of basic amino acid with cellulose used in the present invention are a partial ester of lysine with cellulose, a partial ester of arginine with cellulose, a partial ester of ornithine with cellulose and a partial ester of histidine with cellulose.

Examples of the salt of the partial ester of basic amino acid with cellulose are salts with organic acid such as acetate, lactate, malate, tartrate, succinate, citrate, benzoate and pyrrolidonecarboxylate, salts with inorganic acid such as hydrochloride, sulfate and phosphate and a salt with Lewis acid.

The partial ester of basic amino acid with cellulose used in the present invention may be prepared, for example, by the following method. Thus, cellulose is contacted to a treating solution containing a basic amino acid ester and then subjected to liquid removal and drying in an appropriate manner. After that, a heating treatment is carried out and then an after-treatment such as washing is carried out in order to remove the unreacted basic amino acid ester. It is further possible to make the partial ester of basic amino acid with cellulose into a salt when the corresponding acid is used in a step after the heating treatment.

Specific examples of the basic amino acid ester used for the above-mentioned treating solution are $C_{1-6}$ lower alkyl esters. With regard to the treating agent solution, that where the basic amino acid ester is dissolved or dispersed in water, alcohol or a mixture thereof is used. When the basic amino acid ester is a salt such as hydrochloride or sulfate, it may be neutralized, if necessary, with alkali hydroxide in an amount of 10 to 200 molar % of the basic amino acid ester. Amount of the basic amino acid ester in the treating solution may be free so far as it is within such a range that it is able to be dissolved or dispersed. Cellulose is permeated in the treating solution, then liquid is removed if necessary and air-drying or drying with heating is appropriately carried out. After that is heated at 100 to 200°C or, preferably, at 120 to 180°C for 10 seconds to 100 minutes or, preferably, for 1 to 60 minute(s) and then subjected to washing and drying treatments to give a partial ester of basic amino acid with cellulose. The washing is carried out in an order of with water, then with an alkaline aqueous solution such as sodium bicarbonate and an aqueous organic acid solution such as citric acid and finally with water although a part of the above may be omitted. During the washing with an aqueous solution of organic acid, a basic amino acid which is bonded to cellulose to form an ester forms a salt and, therefore, when washing with an aqueous solution of organic solvent is carried out, the product may be obtained as an organic acid salt of a partial ester of basic amino acid with cellulose.

As hereunder, the present invention will be illustrated in more detail although the present invention is not limited to those examples only.

<Manufacturing Example 1> Manufacture of a citrate of a partial ester of L-lysine with cellulose

L-Lysine methyl ester dihydrochloride (2.33 g, 10 mmol) was dissolved in 15 ml of methanol and 5 ml of 2N aqueous solution of sodium hydroxide were added thereto to prepare a treating solution. Cotton nonwoven fabric (5.0 g) (CX 32 manufactured by Haniron K. K.) was permeated in the treating solution, air-dried for 1 hour and heated at 140°C for 20 minutes. This was washed with water, then rinsed with 5% aqueous sodium bicarbonate solution and water for three times, rinsed with 10% aqueous solution of citric acid and water for three times, dehydrated and air-dried to give a sample. A part of the sample was dried in vacuo at 50°C for one night and about 0.5 g thereof was precisely weighed and was subjected to an alkali hydrolysis by stirring in 50 ml of 0.5N sodium hydroxide at room temperature for 18 hours. The fiber was filtered off and quantitative determination of L-lysine was carried out using an amino acid analyzer (L-8500 manufactured by Hitachi). When the bonding amount of L-lysine per gram of the sample was calculated from the above result, it was 0.105 mmol. When the bonding amount of citric acid per gram of the sample was calculated from the result of quantitative determination of citric acid from the same sample solution by means of an HPLC, it was 0.190 mmol.

[Table 1]

| Antibacterial Test Result of Underlay for Perishable Foods Prepared by Using the Nonwoven Fabric of Manufacturing Example 1 | | |
|---|---|---|
| Tested Microorganism Species | *Staphylococcus aureus* | *Klebsiella pneumoniae* |
| (Accession Numbers) | (ATCC 6538 P) | (ATCC 4352) |
| Invested Microorganism Concentration (cells/ml) | $2.5 \times 10^4$ | $2.5 \times 10^4$ |
| Living Cells after 18 Hours (cells/ml) | < 20 | < 20 |
| Proliferation Value (F) | 2.8 | 3.3 |
| Bacteriostatic Activity Value (S) | > 5.9 | > 6.4 |
| Bactericidal Activity Value (L) | > 3.1 | > 3.1 |

<Manufacturing Example 2> Manufacture of a citrate of a partial ester of L-arginine with cellulose

The same experiment as in Manufacturing Example 1 was carried out using 2.61 g (10 mmol) of L-arginine methyl ester dihydrochloride instead of L-lysine methyl ester dihydrochloride of Manufacturing Example 1. When the bonding amounts of L-arginine and citric acid in 1 g of the sample were calculated by the same method as in Manufacturing Example 1, they were found to be 0.109 mmol and 0.162 mmol, respectively.

[Table 2]

| Antibacterial Test Result of Underlay for Perishable Foods Prepared by Using the Nonwoven Fabric of Manufacturing Example 2 | | |
|---|---|---|
| Tested Microorganism Species | *Staphylococcus aureus* | *Klebsiella pneumoniae* |
| (Accession Numbers) | (ATCC 6538 P) | (ATCC 4352) |
| Invested Microorganism Concentration (cells/ml) | $2.5 \times 10^4$ | $2.5 \times 10^4$ |
| Living Cells after 18 Hours (cells/ml) | $1.9 \times 10^2$ | < 20 |
| Proliferation Value (F) | 2.8 | 3.3 |
| Bacteriostatic Activity Value (S) | 4.9 | > 6.4 |
| Bactericidal Activity Value (L) | 2.1 | > 3.1 |

<Example 1>

Underlays for perishable foods were prepared using a nonwoven fabric of citrate of partial ester of L-lysine with cellulose of Manufacturing Example 1, a nonwoven fabric of citrate of partial ester of L-arginine with cellulose of Manufacturing Example 2 and a non-processed nonwoven fabric.
Incidentally, water-absorbing property was compared with an assumption of the case of wrapping of beast meat, avian meat or fish meat but there is no difference between the underlay for perishable foods prepared by using a nonwoven fabric of citrate of a partial ester of L-lysine or L-arginine with cellulose and the underlay for perishable foods prepared by using a non-processed nonwoven fabric in terms of their water-absorbing property.

<Test Example 1>

Square pieces each having about 18 mm side were prepared from those underlays for perishable foods and their antibacterial test was carried out in accordance with the process mentioned in "JIS L 1902:1998 'Antibacterial Test Method for Fiber Products' 8. Quantitative Test". With regard to the test microorganisms, *Staphylococcus aureus* (ATCC 6538 P) and *Klebsiella pneumoniae* (ATCC 4352) were used. Each of the samples was sterilized with high-pressure steam, a predetermined amount (about 2.5 x 10⁴ cells) of the microorganism suspended in a nutrient broth medium was inoculated and incubated at 37°C for 18 hours and numbers of the living cells were determined.

As to the formulae for JIS L 1902:1998, the followings are mentioned.

$$F = M_b - M_a; \quad S = M_b - M_c; \quad \text{and} \quad L = M_a - M_c$$

(In the formulae, F is proliferation value; S is bacteriostatic activity value; L is bactericidal activity value; $M_a$ is common logarithm of numbers of living cells immediately after inoculation of a non-processed sample (an average of the three samples); $M_b$ is common logarithm of numbers of living cells after incubation of a non-processed sample for 18 hours (an average of the three samples); and $M_c$ is common logarithm of numbers of living cells after incubation of a processed sample for 18 hours (an average of the three samples).) Proliferation values, bacteriostatic activity values and bactericidal activity values were calculated from the above.

As a result of those tests, it was confirmed that the underlays for perishable foods prepared from nonwoven fabric of citrates of partial ester of L-lysine and L-arginine with cellulose showed a sufficient antibacterial activity.

<Test Example 2>

A piece (0.422 g) of an underlay for perishable foods using a nonwoven fabric of a citrate of a partial ester of L-lysine with cellulose prepared in Example 1 was shaken in 10 ml of water at room temperature to carry out an elution test. When the eluted components were analyzed by an HPLC, elutions of 0.0098 mmol and 0.0130 mmol of L-lysine per gram of the piece were noted was noted after 1 hour and 5 hours, respectively. No other eluate than L-lysine was noted.

Industrial Applicability

In accordance with the present invention, it is now possible to provide a wrapping material and an underlay having excellent antibacterial property and safety where a partial ester of basic amino acid with cellulose or a salt thereof is a constituting component.

The wrapping material or the underlay according to the present invention is able to be used as wrapping materials for foods, particularly as a wrapping of individual thing, inner wrapping, outer wrapping, underlay, etc. of processed foods such as ham, sausage, *kamaboko* (processed fish meat paste), household dish, packed luncheon and confectionery or as wrapping of individual thing, inner wrapping, outer wrapping, underlay, etc. of perishable foods such as beast meat, avian meat, fish meat, vegetable and fruit.

The wrapping material or the underlay according to the present invention is also able to be used as wrapping material or underlay for sanitary goods such as paper diaper, adult incontinence pad, sanitary napkin, sanitary tampon, panty sheet, sweat-absorbing pad, breast milk pad and wet wipe.

The wrapping material or the underlay according to the present invention is further able to be used as wrapping material and underlay for medical supplies such as cotton swab, first-aid bandage, surgical dressing, medical tampon, medical mask, gauze, bandage, medical sheets, medical towel, medical drape, gown for operator, clothing for patient, medical cap, medical apron and medical cover.

The wrapping material or underlay of the present invention may be anything so far as a partial ester of basic amino acid with cellulose or a salt thereof is compounded at least as a part of the product while other parts may adopt the conventionally known structures. For example, when it is used as an underlay for wrapping of perishable foods such as beast meat, avian meat, fish meat, vegetable and fruit, a partial ester of basic amino acid with cellulose or a salt thereof may be compounded in a part of an absorbent which absorbs the liquid being oozed out from the food.

The term "underlay" used in the present invention includes not only that which is laid under the content but also that which is placed in upper area, side area or inner area of the content and that which is used for partitioning the content up and down, right and left or front and back.

**Claims**

1. A wrapping material or an underlay where a partial ester of basic amino acid with cellulose or a salt thereof is used as a constituting component.

<div align="center">

**INTERNATIONAL SEARCH REPORT**

</div>

| | International application No. |
|---|---|
| | PCT/JP02/11244 |

| A. CLASSIFICATION OF SUBJECT MATTER |
|---|
| Int.Cl$^7$ A23L3/00, A23L3/3562 |
| According to International Patent Classification (IPC) or to both national classification and IPC |

| B. FIELDS SEARCHED |
|---|
| Minimum documentation searched (classification system followed by classification symbols)<br>Int.Cl$^7$ A23L3/00, A23L3/3562 |
| Documentation searched other than minimum documentation to the extent that such documents are included in the fields searched |
| Electronic data base consulted during the international search (name of data base and, where practicable, search terms used)<br>CA(STN), BIOSIS(DIALOG) |

| C. DOCUMENTS CONSIDERED TO BE RELEVANT |
|---|

| Category* | Citation of document, with indication, where appropriate, of the relevant passages | Relevant to claim No. |
|---|---|---|
| E,X | WO 01/92632 A1 (AJINOMOTO KABUSHIKI KAISHA)<br>06 December, 2001 (06.12.01),<br>& JP 2001-340378 A | 1 |
| A | JP 10-17846 A (Rengo Co., Ltd.),<br>20 January, 1998 (20.01.98),<br>(Family: none) | 1 |
| A | US 3944470 A (PROCTER & GAMBLE CO.),<br>16 March, 1976 (16.03.76),<br>& NL 7408763 A     & BE 817108 A<br>& DE 2430699 A     & FR 2235135 A | 1 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 December, 2002 (24.12.02) | 14 January, 2003 (14.01.03) |

| Name and mailing address of the ISA/<br>Japanese Patent Office | Authorized officer |
|---|---|
| Facsimile No. | Telephone No. |

Form PCT/ISA/210 (second sheet) (July 1998)